# EUROPÄISCHE PATENTSCHRIFT

(11) **EP 0 501 177 B1**
(45) Veröffentlichungstag und Bekanntmachung des Hinweises auf die Patenterteilung: **06.09.1995**
(21) Anmeldenummer: 92101755.4
(22) Anmeldetag: 04.02.1992
(51) Int. Cl.: B60R 13/08, F02B 77/13, G10K 11/16

(54) **Befestigungsanordnung einer Motorkapsel in einem Nutzfahrzeug**
Fastening arrangement for the encapsulation of the motor in a commercial vehicle
Dispositif de fixation de l'enveloppe d'un moteur pour véhicule utilitaire

(30) Priorität: 26.02.1991 DE 4105954
(43) Veröffentlichungstag der Anmeldung: 02.09.1992
(73) Patentinhaber: Iveco Magirus Aktiengesellschaft, D-89017 Ulm (DE)
(72) Erfinder: Bartsch, Erhard, W-7916 Nersingen (DE); May, Walter, W-7906 Blaustein (DE); Savio, Piero, I-10040 Turin-Borgaretto (IT); Six, Werner, W-7910 Neu-Ulm (DE); Kneifel, Eberhard, W-7913 Senden (DE)
(74) Vertreter: TER MEER STEINMEISTER & PARTNER GbR

(56) Entgegenhaltungen:
- DE-A- 2 329 985
- DE-A- 2 801 339
- FR-A- 2 314 088
- FR-A- 2 373 116
- GB-A- 2 167 020
- PATENT ABSTRACTS OF JAPAN vol. 12, no. 272 (M-724)(3119) 28. Juli 1988 & JP-A-63 053 146 (HINO MOTORS LTD.) 7. März 1988

## Beschreibung

Die Erfindung betrifft eine Anordnung zur Befestigung einer Motorkapsel in einem Nutzfahrzeug mit zumindest einem Motor in der Kapsel.

Aus DE-OS 2 952 191 ist ein Nutzfahrzeug mit einer innerhalb des Fahrerhauses angeordneten Kapsel zur Aufnahme eines Antriebsmotors bekannt, wobei die Kapsel direkt am Fahrerhausboden mittels starrer Befestigungselemente angebracht ist. Nachteilig hierbei ist, daß die starren Befestigungselemente Körperschall von der Motorkapsel auf den Fahrerhausboden übertragen, was mit einer Lärmbelästigung der Fahrzeuginsassen einhergeht.

Aufgabe der Erfindung ist die Schaffung einer Befestigungsanordnung der eingangs genannten Art, welche bei einfachem Aufbau für einen niedrigen Lärm- oder Dröhnpegel im Fahrerhausinnern sorgt.

Gelöst wird die der Erfindung zugrundeliegende Aufgabe durch die im Anspruch 1 angegebenen Mittel.

Vorteilhaft weitergebildet wird der Erfindungsgegenstand durch die Merkmale der Unteransprüche 2 bis 16.

Wesen der Erfindung ist, die Schallübertragung von der Motorkapsel auf den Fahrerhausboden im wesentlichen dadurch zu vermeiden, daß der Zwischenraum zwischen der Motorkapsel und dem Fahrerhaus als auf das Frequenzbild des Motors abgestimmter Schalldämpfer ausgebildet ist.

Der Zwischenraum ist ein abgeschlossener Hohlraum mit einem abgeschlossenen Luftvolumen, wobei seitlich angeordnete schalldämmende Befestigungsmittel in Form von Luftabdichtungsleisten vorgesehen sind.

Der Zwischenraum kann vorzugsweise mit einer schalldämmenden Weichschaumschicht ausgefüllt sein, welche auch zumindest eines der schalldämmenden Befestigungsmittel ist.

Alternativ kann der Zwischenraum auch voneinander beabstandete schalldämmende Weichschaumelemente enthalten, welche ihrerseits zumindest einige der schalldämmenden Befestigungselemente sind.

Zumindest einige der schalldämmenden Weichschaumelemente können den Zwischenraum örtlich an denjenigen Stellen überbrücken, welche im Bereich von Schallschwingungsknoten liegen.

Vornehmlich überbrücken schalldämmende Befestigungsmittel den Zwischenraum in vertikaler Richtung.

Als Befestigungsmittel kann eine Verschraubung eines Distanzstücks mit der Unterseite des Fahrerhausbodens vorgesehen sein, wobei in einer Umfangsaussparung des Distanzstücks ein Weichgummi-Abdichtungsteil aufgenommen ist, welches seinerseits in einer äußeren Umfangsaussparung einen Befestigungsflansch der Motorkapselwand im wesentlichen formschlüssig aufnimmt.

Das Distanzstück ist vorzugsweise ein Hartgummiteil.

Insbesondere weist das Weichgummiteil Umfangsdichtlippen auf, welche in einem Abdichtungseingriff mit dem Distanzstück gelegen sind.

Eine andere vorteilhafte Ausführungsvariante eines schalldämmenden Befestigungsmittels sieht eine Verschraubung zweier Schnappeingriffsteile mit der Unterseite des Fahrerhausbodens vor, wobei das obere Schnappeingriffsteil eine Buchse mit einem inneren unteren Eingriffsumfangsrand und das untere Schnappeingriffsteil eine Tellerbuchse mit einem oberen äußeren Eingriffsumfangsrand sind, und ferner der Teller der Tellerbuchse die Motorkapselwand unter Zwischenordnung zweier Weichgummiabdichtungen verspannt.

Der obere Rand der Buchse bzw. des oberen Schnappeingriffsteils ist vorzugsweise in einer Ausnehmung der oberen Weichgummiabdichtung aufgenommen, so daß die Buchse bezüglich des Fahrerhausbodens schalldämmend und abdichtend verspannt ist.

Oberes und unteres Schnappeingriffsteil sind vornehmlich aus Hartgummi ausgebildet.

Die Verschraubung ist vorzugsweise eine Senkverschraubung, welche in einer Fahrerhausbodenvertiefung eingelassen ist, so daß im Fahrerhaus ein ebener Fahrerhausboden eingerichtet ist.

Die schalldämmenden Befestigungsmittel sind vorzugsweise rund bzw. ringförmig.

Die Weichgummiabdichtungen weisen Umfangsdichtflansche auf, welche gegenüber der Motorkapselwand, dem Fahrerhausboden und den Schnappeingriffsteilen abdichten.

Eine weitere vorteilhafte Ausgestaltung der Erfindung kennzeichnet sich dadurch, daß zumindest die obere Motorkapselwand eine innere Dämmschicht aufweist, welche im Bereich des Befestigungsflansches zusammen mit der Motorkapselwand im Weichgummi-Abdichtungsteil formschlüssig aufgenommen bzw. zwischen oberer und unterer weichgummiabdichtung der Verschraubung verspannt ist.

Durch die Erfindung erfolgt also eine Abkopplung der Motorkapsel vom Fahrerhausboden um einen ganz bestimmten, im Einzelfall zu optimierenden Abstand (z.B. 15 bis 20 mm) und Anbringung der Motorkapsel am Fahrerhausboden über schalldämmende Mittel. Dadurch wird eine Lärmreduzierung im Fahrerhaus mit minimalem technischen Aufwand erreicht. Bei entsprechender Abstimmung des Systems gemäß der Erfindung wird eine Lärmreduzierung im Fahrerhaus insbesondere über den gesamten Frequenzbereich des Motors erzielt.

Aus DE-PS 2 620 774 ist zwar ein Luftspalt zwischen Motorkapsel und Fahrerhausboden bekannt. Jedoch ist hier die Kapsel motorseitig befestigt, wobei der vorhandene Luftspalt zur Führung der Abluft dient. Der vorhandene Luftspalt ist nicht auf das Frequenzbild des Motors abgestimmt und dient nicht als Dämpfer, wie dies bei der Erfindung der Fall ist. Zwar ist es aus DE-AS 2 329 985 bekannt, eine bestimmte im Hörbereich liegende Frequenz eines Versteifungsblechs einer elastischen Halterung zu unterdrücken. Das bekannte Versteifungsblech liegt jedoch bei einem Personenkraftfahrzeug im Bereich des Kardantunnels und dient nicht unmittelbar zur Schalldämmung in einem breiten Frequenzbereich, insbesondere nicht zur Schalldämmung eines Motors.

Die Erfindung wird nachfolgend anhand von Ausführungsbeispielen unter Bezugnahme auf die beigefügte Zeichnung näher erläutert; es zeigen:
- Fig. 1: Quer- und Längsschnitt eines Nutzfahrzeug-Fahrerhausbodenbereichs mit unterseitig angehängter Motorkapsel in schematischer Darstellung,
- Fig. 2: Schnitte ähnlich Fig. 1 einer anderen Motorkapselaufhängung,
- Fig. 3: Schnitte ähnlich den Fig. 1 und 2 einer dritten Motorkapsel-Aufhängungsvariante,
- Fig. 4: Schnitte ähnlich den Fig. 1 und 2 einer vierten Motorkapsel-Aufhängungsvariante,
- Fig. 5: ein schalldämmendes Befestigungsmittel in besonderer Ausführungsform, und
- Fig. 6: ein weiteres schalldämmendes Befestigungsmittel.

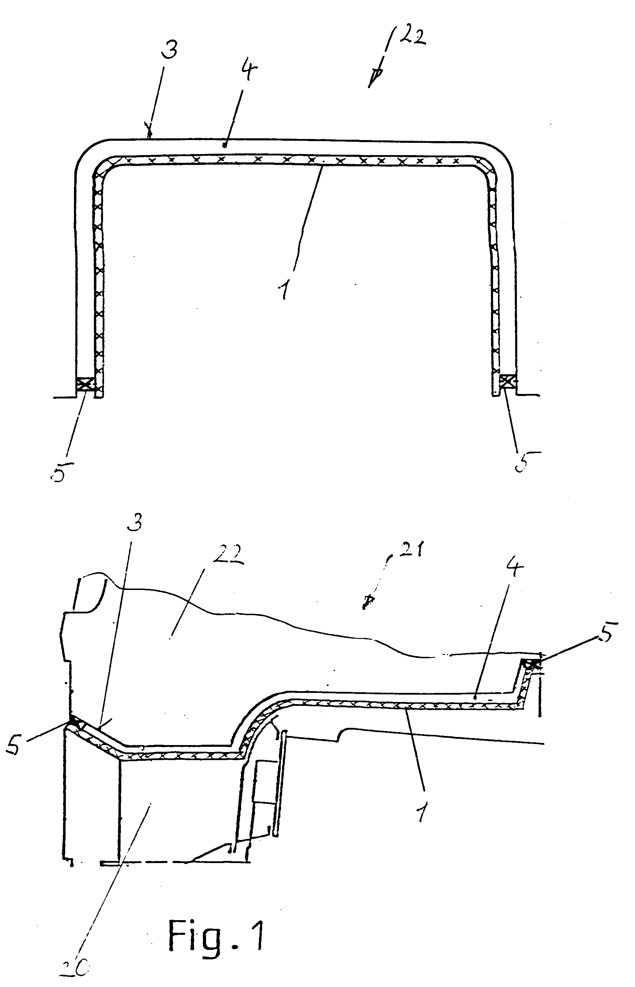

In Fig. 1 ist schematisch bei einem Nutzfahrzeug 21 der vordere Bereich eines Fahrerhauses 22 mit Fahrerhausboden 3 gezeigt, unter welchem sich eine Motorkapsel 20 befindet, in welcher ihrerseits ein oder mehrere Fahrzeugmotoren aufgenommen sind, welche sich an einer nicht gezeigten Fahrzeugstelle abstützen.

Die Motorkapsel 20 ist im Bereich der oberen Motorkapselwand 1 in einem ganz bestimmten, im Einzelfall zu optimierenden Abstand zur Unterseite des Fahrerhausbodens 3 gelegen. Insbesondere ist die Motorkapselwand 1 an der Unterseite des Fahrerhausbodens 3 angehängt, und zwar durch seitlich bzw. ringsum angeordnete Befestigungsmittel 5, welche auch gleichzeitig als Dichtleisten ausgebildet sind, so daß durch den Zwischenraum 4 zwischen Motorkapselwand 1 und Fahrerhausboden 3 zusammen mit den seitlichen Dichtleisten ein geschlossener Raum mit einem abgeschlossenen Luftvolumen ausgebildet ist.

Der Zwischenraum 4 zwischen Fahrerhausboden 3 und Motorkapsel 20 ist hierbei so getroffen, daß er durch Abstimmung auf das Frequenzbild des Motors in der Kapsel einen Schalldämpfer ausbildet, welcher im Betrieb des Nutzfahrzeugs 21 den Lärm- oder Dröhnpegel im Fahrerhaus 22 im wesentlichen unterdrückt, und zwar über den gesamten Frequenzbereich des Motors.

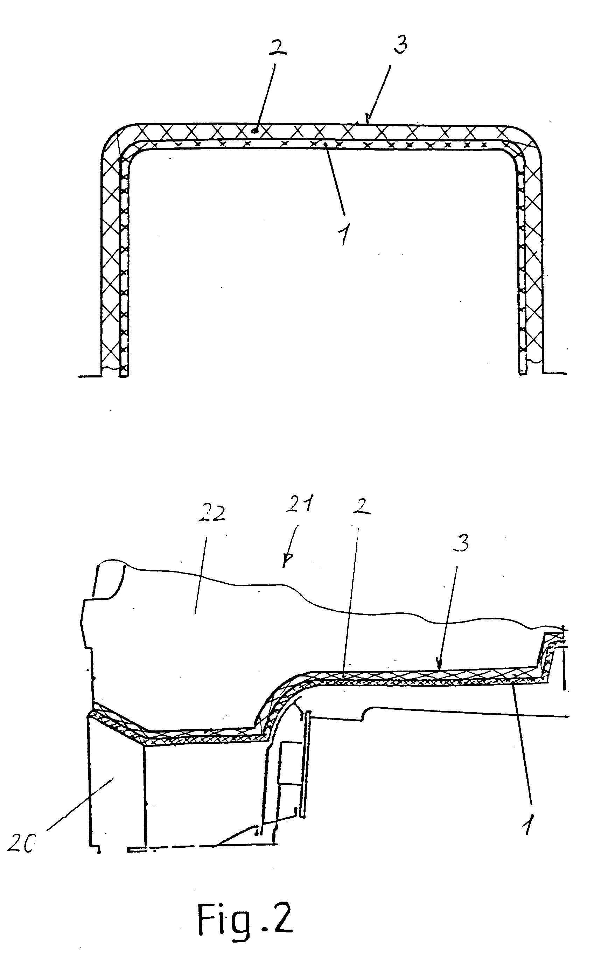

In Fig. 2, welche im wesentlichen der Fig. 1 entspricht, ist der Zwischenraum 4 zwischen Fahrerhausboden 3 und Motorkapselwand 1 gemäß Fig. 1 vollständig mit einer Weichschaumschicht 2 ausgefüllt. Die Schicht dient der optimalen Vermeidung einer Schallübertragung und gleichzeitig als Befestigungselement der Motorkapsel 20. In dieser Ausführungsvariante ist also die schalldämmende Weichschaumschicht 2 auf das Frequenzbild des Motors des Nutzfahrzeuges 21 abgestimmt.

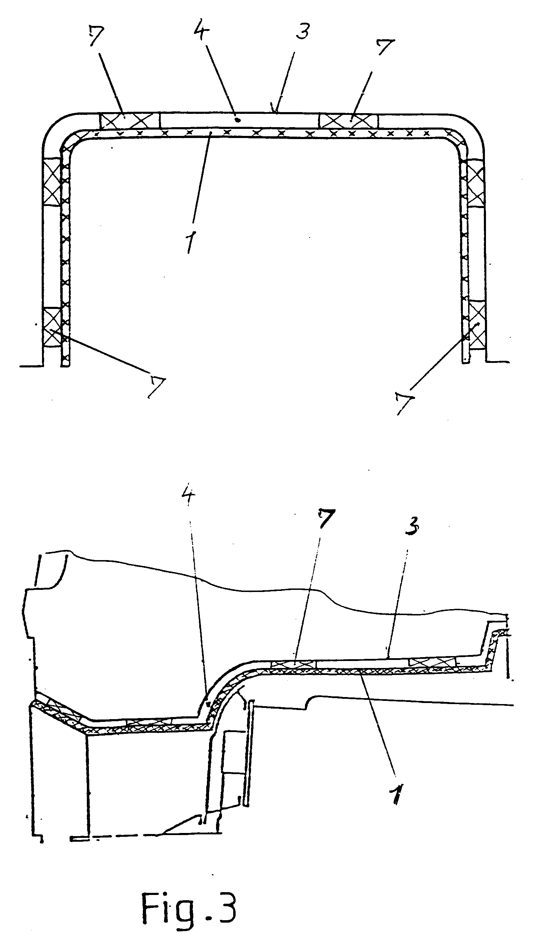

Die Ausführungsvariante nach Fig. 3 sieht bei einer Motorkapselwand 1 örtlich angebrachte schalldämmende Weichschaumelemente 7 vor, welche mit dem Fahrerhausboden 3 verbunden sind.

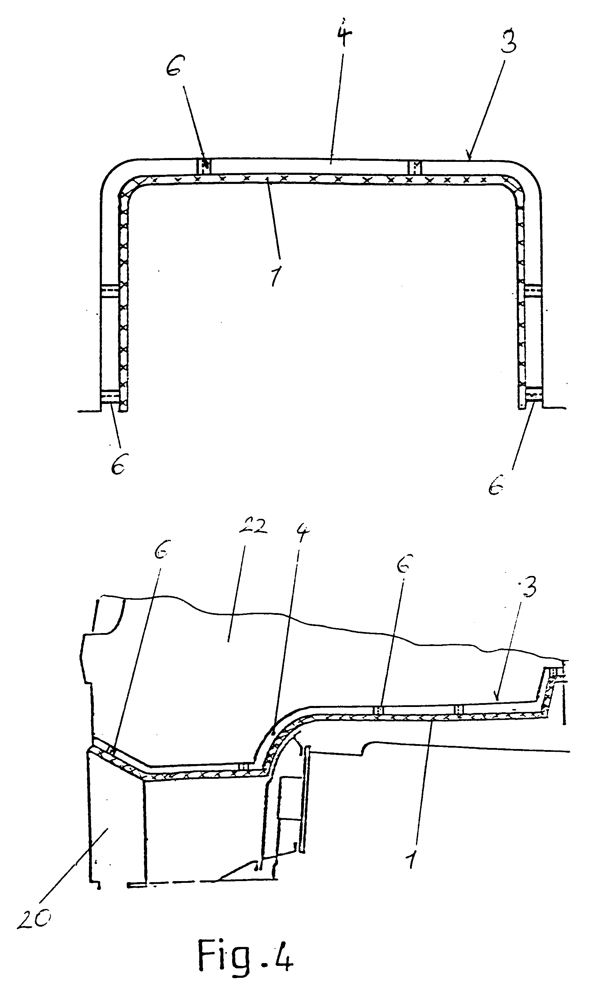

Die Ausführungsvariante nach Fig. 4 zeigt besonders ausgestaltete schalldämmende Befestigungsmittel 6 zwischen Fahrerhausboden 3 und Motorkapselwand 1, welche vornehmlich in vertikaler Richtung angeordnet sind. Durch die schalldämmenden Befestigungsmittel 6 entsteht ein Zwischenraum 4 zwischen Fahrerhausboden 3 und oberer Motorkapselwand 1. Die Befestigungsmittel 6 werden vornehmlich an Stellen angebracht, an denen minimale Amplituden (sog. Schwingungsknoten) auftreten. Diese Punkte werden durch Versuch ermittelt. Durch Anbringung der Motorkapsel 20 bzw. der Motorkapselwand 1 an den ermittelten Punkten mit Hilfe der schalldämmenden Befestigungsmittel 6 erfolgt eine minimale Schallübertragung von der Motorkapsel zum Fahrerhausboden hin.

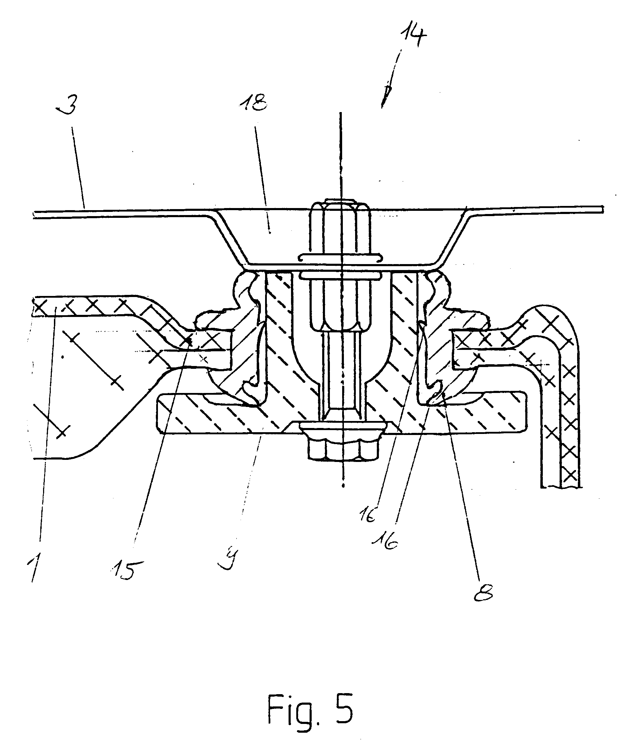

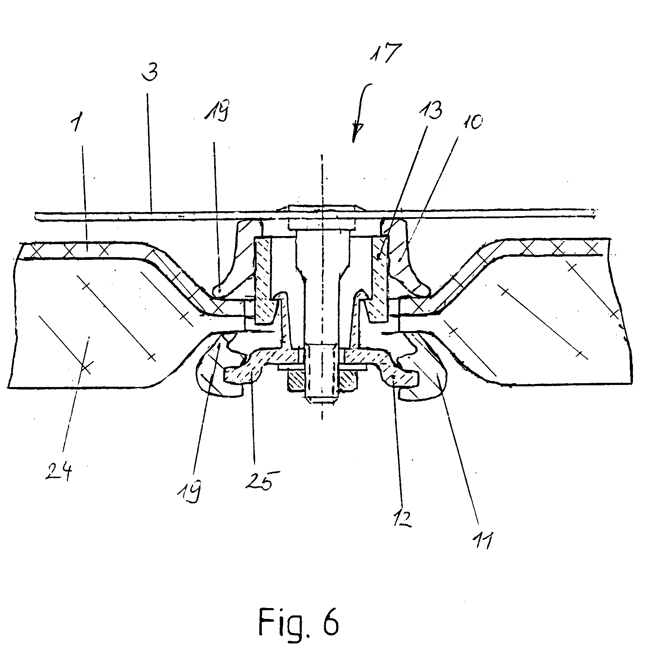

Die schalldämmenden Befestigungsmittel 6 sind vorzugsweise gemäß den Fig. 5 und 6 ausgestaltet. Sie können zusammen mit einer geschlossenen oderteilweise vorhandenen Weichschaumschicht im Zwischenraum zwischen Fahrerhausboden 3 und Motorkapselwand 1 vorgesehen sein.

Gemäß Fig. 5 ist als schalldämmendes Befestigungsmittel eine Verschraubung 14 eines Hartgummi-Distanzstücks 9 mit der Unterseite des Fahrerhausbodens 3 vorgesehen, wobei in einer Umfangsaussparung des Distanzstücks ein Weichgummi-Abdichtungsteil aufgenommen ist, welches seinerseits in einer äußeren Umfangsaussparung einen Befestigungsflansch der Motorkapselwand im wesentlichen formschlüssig aufnimmt. Das Weichgummi-Abdichtungsteil 8 besitzt Umfangsdichtlippen 16, welche in einem Abdichtungseingriff mit dem Distanzstück 9 stehen. Das Distanzstück 9 aus Hartgummi übernimmt zugleich Abstand und Führung des Gummielements. Die Verschraubung 14 ist als sog. Senkverschraubung vorgesehen, wobei im Bereich der Befestigungsstelle eine Vertiefung 18 im Fahrerhausboden 3 ausgebildet ist, welche die obere Mutter der Verschraubung 14 aufnimmt.

In Fig. 6 ist eine weitere Ausführungsvariante eines schalldämmenden Befestigungselements in Form einer Verschraubung 17 vorgesehen, welche zwei Schnappeingriffsteile 12,13 mit der Unterseite des Fahrerhausbodens 3 verspannt. Das obere Schnappeingriffsteil 13 ist in Form einer Buchse ausgebildet und besitzt einen unteren inneren Eingriffsumfangsrand. Das untere Schnappeingriffsteil ist als Tellerbuchse mit einem unteren Teller 25 ausgebildet und besitzt einen oberen äußeren Eingriffsumfangsrand. Der Teller 25 der Tellerbuchse bzw. des unteren Schnappeingriffsteils 12 verspannt die obere Motorkapselwand 1 zusammen mit einer unterseitig angebrachten Dämmschicht 24 gegen den Fahrerhausboden 3 in einem ganz bestimmten Abstand unter Zwischenordnung der unteren Weichgummiabdichtung 11 und der oberen Weichgummiabdichtung 10. Die obere Weichgummiabdichtung 10 weist eine Innenaussparung auf, in der das obere Schnappeingriffsteil im Bereich des oberen Rands aufgenommen ist, letztgenanntes Teil also nicht direkt gegen den Fahrerhausboden 3 anliegt. Bei vollständiger Verschraubung bzw. Verspannung rasten die beiden Schnappeingriffsteile im Bereich ihrer Eingriffsumfangsränder clips-artig ein.

Die als schalldämmende Befestigungsmittel ausgebildeten Verschraubungen 14 und 17 gemäß den Fig. 5 und 6 sowie entsprechend auch die schalldämmenden Befestigungsmittel 5 gemäß Fig. 1, die schalldämmenden Befestigungsmittel 6 gemäß Fig. 4 und die schalldämmenden Befestigungselemente 7 gemäß Fig. 3 liegen bevorzugt an Stellen, an denen minimale Schwingungsamplituden, sog. Schwingungsknoten, auftreten.

## Patentansprüche

1. Anordnung zur Befestigung einer Motorkapsel (20) in einem Nutzfahrzeug (21), mit zumindest einem Motor in der Kapsel, dadurch **gekennzeichnet**, daß die Motorkapsel (20) über schalldämmende Befestigungsmittel (2,5, 6,7,14,17) an der Unterseite des Fahrerhausbodens in einem Abstand zu diesem befestigt bzw. aufgehängt ist, daß der Zwischenraum (4) zwischen dem Fahrerhausboden (3) und der Motorkapsel (20) als auf das Frequenzbild des Motors durch Optimierung des Abstandes zwischen Fahrerhausboden und Motorkapsel abgestimmter Schalldämpfer ausgebildet ist, und daß der Zwischenraum (4) durch seitlich angeordnete, schalldämmende Befestigungsmittel (5), die als Luftabdichtungsleisten ausgebildet sind, einen abgeschlossenen Hohlraum mit abgeschlossenem Luftvolumen bildet.

2. Befestigungsanordnung nach Anspruch 1,
dadurch gekennzeichnet,
daß der Zwischenraum (4) mit einer schalldämmenden Weichschaumschicht (2) ausgefüllt ist, welche zumindest eines der schalldämmenden Befestigungsmittel ist.

3. Befestigungsanordnung nach Anspruch 1,
dadurch gekennzeichnet,
daß der Zwischenraum (4) voneinander beabstandete schalldämmende Weichschaumelemente (7) enthält, welche zumindest einige der schalldämmenden Befestigungsmittel sind.

4. Befestigungsanordnung nach Anspruch 3,
dadurch gekennzeichnet,
daß zumindest einige der schalldämmenden Weichschaumelemente (7) den Zwischenraum (4) örtlich an Stellen überbrücken, an welchen minimale Schwingungsamplituden bzw. Schwingungsknoten liegen.

5. Befestigungsanordnung nach einem der Ansprüche 1 bis 4,
dadurch gekennzeichnet,
daß die schalldämmenden Befestigungsmittel bzw. -elemente (2,5,6,7,14,17) Zwischenraum (4) vornehmlich im wesentlichen in vertikaler Richtung überbrücken.

6. Befestigungsanordnung nach einem der Ansprüche 1 bis 5,
dadurch gekennzeichnet,
daß als zumindest eines der schalldämmenden Befestigungsmittel eine Verschraubung (14) eines Distanzstücks (9) mit der Unterseite des Fahrerhausbodens (3) vorgesehen ist, wobei in einer Umfangsaussparung des Distanzstücks (9) ein Weichgummi-Abdichtungsteil (8) aufgenommen ist, welches seinerseits in einer äußeren Umfangsaussparung einen Befestigungsflansch (15) der Motorkapselwand (1) im wesentlichen formschlüssig aufnimmt.

7. Befestigungsanordnung nach Anspruch 6,
dadurch gekennzeichnet,
daß das Distanzstück (9) ein Hartgummiteil ist.

8. Befestigungsanordnung nach Anspruch 6 oder 7,
dadurch gekennzeichnet,
daß das Weichgummi-Abdichtungsteil (8) Umfangsdichtlippen (16) aufweist, welche in einem Abdichtungseingriff mit dem Distanzstück (9) gelegen sind.

9. Befestigungsanordnung nach einem der Ansprüche 6 bis 8,
dadurch gekennzeichnet,
daß als zumindest eines der schalldämmenden Befestigungsmittel eine Verschraubung (17) zweier Schnappeingriffsteile (12, 13) vorgesehen ist, wobei das obere Schnappeingriffsteil (13) eine Buchse mit einem inneren unteren Eingriffsumfangsrand und das untere Schnappeingriffsteil (12) eine Tellerbuchse mit einem oberen äußeren Eingriffsumfangsrand sind, und ferner der Teller der Tellerbuchse die Motorkapselwand (1) unter Zwischenordnung zweier Weichgummiabdichtungen (10, 11) verspannt.

10. Befestigungsanordnung nach Anspruch 9,
dadurch gekennzeichnet,
daß der obere Rand des oberen Schnappeingriffsteils (13) in einer Aussparung der oberen Weichgummiabdichtung (10) aufgenommen ist.

11. Befestigungsanordnung nach Anspruch 9 oder 10,
dadurch gekennzeichnet,
daß die beiden Schnappeingriffsteile (12, 13) aus Hartgummi ausgebildet sind.

12. Befestigungsanordnung nach einem der Ansprüche 6 bis 11,
dadurch gekennzeichnet,
daß die Verschraubung (14 bzw. 17) eine Senkverschraubung ist, welche in einer Fahrerhausbodenvertiefung eingelassen ist.

13. Befestigungsanordnung nach einem der Ansprüche 6 bis 12,
dadurch gekennzeichnet,
daß die schalldämmenden Befestigungsmittel rund bzw. ringförmig ausgebildet sind.

14. Befestigungsanordnung nach einem der Ansprüche 6 bis 13,
dadurch gekennzeichnet,
daß die Weichgummiabdichtungen (10, 11) Umfangsdichtflansche (19) besitzen.

15. Befestigungsanordnung nach einem der Ansprüche 1 bis 14,
dadurch gekennzeichnet,
daß zumindest die obere Motorkapselwand (1) eine innere Dämmschicht (24) aufweist, welche im Bereich des Befestigungsflansches (15) zusammen mit der Motorkapselwand (1) im Weichgummi-Abdichtungsteil (8) formschlüssig aufgenommen bzw. zwischen oberer und unterer Weichgummiabdichtung (10, 11) der Verschraubung (17) verspannt ist.

## Claims

1. An arrangement for fastening an engine cover (20) in a commercial vehicle (21), with at least one engine in the cover, characterised in that the engine cover (20) is secured or suspended via sound-insulating fastening means (2,5,6,7,14,17) to the underside of the cab floor at a distance therefrom, in that the space (4) between the cab floor (3) and the engine cover (20) takes the form of a sound damper tuned to the frequency graph of the engine by optimising the distance between the cab floor and the engine cover, and in that the space (4) forms a closed cavity with closed air volumes by virtue of laterally arranged, sound-insulating fastening means (5) which are in the form of air-sealing strips.

2. A fastening arrangement according to Claim 1, characterised in that the space (4) is filled with a sound-insulating soft foam layer (2) which is at least one of the sound-insulating fastening means.

3. A fastening arrangement according to Claim 1, characterised in that the space (4) contains spaced apart sound-insulating soft foam elements (7) which are at least some of the sound-insulating fastening means.

4. A fastening arrangement according to Claim 3, characterised in that at least one of the sound-insulating soft foam elements (7) locally spans the space (4) at a location where there are minimal oscillation amplitudes or vibration nodes.

5. A fastening arrangement according to any one of Claims 1 to 4, characterised in that the sound-insulating fastening means or elements (2,5,6,7,14,17) span the space (4) substantially in vertical direction.

6. A fastening arrangement according to any one of Claims 1 to 5, characterised in that as at least one of the sound-insulating fastening means there is provided a screw joint (14) of a spacer piece (9) with the underside of the cab floor (3), wherein a soft rubber sealing part (8) is accommodated in a peripheral recess in the spacer piece (9), which sealing part (8) in turn accommodates, in a substantially form-locking manner, in an outer peripheral recess a fastening flange (15) of the engine cover (2).

7. A fastening arrangement according to Claim 6, characterised in that the spacer piece (9) is a hard rubber part.

8. A fastening arrangement according to Claim 6 or 7, characterised in that the soft rubber sealing part (8) has peripheral sealing lips (16) which are disposed in sealing engagement with the spacer piece (9).

9. A fastening arrangement according to any one of Claims 6 to 8, characterised in that a screw joint (17) of two snap-engagement parts (12, 13) is provided as at least one of the sound-insulating fastening means, wherein the upper snap-engagement part (13) is a bushing with an inner lower engagement peripheral edge and the lower snap-engagement part (12) is a plate bushing with an outer engagement peripheral edge, and also the plate of the plate bushing braces the engine cover wall (1) with the interposition of two soft rubber seals (10, 11).

10. A fastening arrangement according to Claim 9, characterised in that the upper edge of the upper snap-engagement part (13) is accommodated in a recess in the upper soft rubber seal (10).

11. A fastening arrangement according to Claim 9 or 10, characterised in that the two snap-engagement parts (12, 13) are formed from hard rubber.

12. A fastening arrangement according to any one of Claims 6 to 11, characterised in that the screw joint (14 or 17) is a countersunk screw joint which is let into a recess in the cab floor.

13. A fastening arrangement according to any one of Claims 6 to 12, characterised in that the sound-insulating fastening means are circular or annular in shape.

14. A fastening arrangement according to any one of Claims 6 to 13, characterised in that the soft rubber seals (10, 11) have peripheral sealing flanges (19).

15. A fastening arrangement according to any one of Claims 1 to 14, characterised in that at least the upper engine cover wall (1) has an inner insulating layer (24) which is received in the vicinity of the fastening flange (15) in a form-locking manner together with the engine cover wall (1) in the soft rubber sealing part (8) or is braced between the upper and lower soft rubber seals (10, 11) of the screw joint (17).

## Revendications

1. Dispositif de fixation d'une enveloppe (20) d'un moteur de véhicule utilitaire (21), avec au moins un moteur dans l'enveloppe, caractérisé en ce que l'enveloppe (20) est fixé ou suspendu à la face inférieure du fond de la cabine, à une distance de celle-ci, par l'intermédiaire de moyens de fixation à isolation phonique (2, 5, 6, 7, 14, 17), le volume intermédiaire (4) entre le fond (3) de la cabine et l'enveloppe (20) du moteur étant réalisé par un isolant phonique accordé en fonction de l'image des fréquences du moteur par optimisation de l'écartement entre le fond de la cabine et l'enveloppe du moteur et ce volume intermédiaire (4) forme grâce à des moyens de fixation (5) à isolation phonique, disposés latéralement, constitués par des longerons d'étanchéité à l'air, une cavité fermée avec des volumes d'air fermés.

2. Dispositif de fixation selon la revendication 1, caractérisé en ce que le volume intermédiaire (4) est rempli d'une couche de mousse souple (2) à isolation phonique, qui est au moins un moyen de fixation à isolation phonique.

3. Dispositif de fixation selon la revendication 1, caractérisé en ce que le volume intermédiaire (4) comporte des éléments en caoutchouc souple (7) à isolation phonique, écartés l'un de l'autre, et qui constituent au moins certains des moyens de fixation à isolation phonique.

4. Dispositif de fixation selon la revendication 3, caractérisé en ce que au moins quelques uns des éléments en caoutchouc souple (7) à isolation phonique traversent le volume intermédiaire (4), localement aux endroits des amplitudes des oscillations minimales ou noeuds des oscillations.

5. Dispositif de fixation selon l'une des revendications 1 à 4, caractérisé en ce que les moyens de fixation à isolation phonique ou éléments de fixation (2, 5, 6, 7, 14, 17) traversent le volume intermédiaire (4) de préférence essentiellement dans la direction verticale.

6. Dispositif de fixation selon l'une des revendications 1 à 5, caractérisé en ce que au moins l'un des moyens de fixation à isolation phonique est une liaison à vis (14) d'une pièce d'écartement (9) à la face inférieure du fond (3) de la cabine, et dans une cavité périphérique de la pièce d'écartement (9), il est prévu une pièce d'étanchéité (8) en caoutchouc souple qui reçoit elle-même dans une cavité périphérique extérieure, une bride de fixation (15) de la paroi (1) de l'enveloppe du moteur suivant une liaison faite essentiellement par la fore.

7. Dispositif de fixation selon la revendication 6, caractérisé en ce que en ce que la pièce d'écartement (9) est une pièce en caoutchouc dur.

8. Dispositif de fixation selon les revendications 6 ou 7, caractérisé en ce que la pièce d'étanchéité en caoutchouc souple (8) comporte des lèvres d'étanchéité (16), périphériques, qui sont en prise d'étanchéité avec une pièce d'écartement (9).

9. Dispositif de fixation selon l'une des revendications 6 à 8, caractérisé en ce qu'au moins l'un des moyens de fixation à isolation phonique est une liaison à vis (17) avec deux pièces à encliquetage (12, 13), la pièce à encliquetage, supérieure (13) étant une douille avec un bord périphérique de prise, intérieur inférieur et la pièce d'encliquetage inférieure (12) est une douille à coupelle avec un bord périphérique extérieur, supérieur de prise et en outre la coupelle de la douille assure le serrage de la paroi (1) de l'enveloppe du moteur avec interposition de deux joints en caoutchouc souples (10, 11).

10. Dispositif de fixation selon la revendication 9, caractérisé en ce que le bord supérieur de la pièce d'encliquetage supérieure (13) est logé dans une cavité du joint en caoutchouc souple (10) supérieur.

11. Dispositif de fixation selon la revendication 9 ou 10, caractérisé en ce que les deux pièces d'encliquetage (12, 13) sont en caoutchouc dur.

12. Dispositif de fixation selon l'une revendications 6 à 11, caractérisé en ce que la liaison à vis (14 ou 17) est une liaison à vis à tête encastrée placée dans une cavité du fond de la cabine.

13. Dispositif de fixation selon l'une des revendications 6 à 12, caractérisé en ce que les moyens de fixation à isolation phonique sont de forme ronde ou annulaire.

14. Dispositif de fixation selon l'une des revendications 6 à 13, caractérisé en ce que les joints en caoutchouc souples (10, 11) possèdent une bride périphérique d'étanchéité (19).

15. Dispositif de fixation selon l'une des revendications 1 à 14, caractérisé en ce que au moins la paroi supérieure (1) de l'enveloppe du moteur comporte une couche d'isolation phonique (24) inférieure qui est reçue au niveau de la bride de fixation (15) avec la paroi (1) de l'enveloppe du moteur, dans la pièce d'étanchéité (8) en caoutchouc souple ou est serrée entre les joints de caoutchouc souple, supérieur et inférieur (10, 11) de la liaison à vis (17).
